# EUROPEAN PATENT APPLICATION

(11) **EP 2 824 068 A1**
(43) Date of publication of application: **14.01.2015**
(21) Application number: 13176340.1
(22) Date of filing: 12.07.2013
(51) Int. Cl.: C01B 3/50

(54) **A method for producing hydrogen and carbon dioxide**

(71) Applicant: Shell Internationale Research Maatschappij B.V., 2596 HR The Hague (NL)
(72) Inventor: The designation of the inventor has not yet been filed
(74) Representative: Matthezing, Robert Maarten

(57) **Abstract**

The present invention provides a method of producing hydrogen (H₂) and carbon dioxide (CO₂), the method at least comprising the steps of:
(a) providing a gaseous hydrocarbon-containing stream (35) at a pressure of at least 8 bara and at a temperature above the dew point of water at the prevailing pressure;
(b) converting the gaseous hydrocarbon-containing stream (35) provided in step (a) thereby obtaining a converted stream (60) comprising H₂ and CO₂;
(c) subjecting the converted stream (60) to a first membrane separation step, thereby obtaining a first H₂-enriched permeate stream (70) and a first H₂-depleted retentate stream (80), the first H₂-enriched permeate stream (70) having a pressure in the range of from 1.5 to 80 bara; and
(d) subjecting the first H₂-depleted retentate stream (80) to a second membrane separation step, thereby obtaining a second H₂-enriched permeate (90) stream and a second H₂-depleted retentate stream (100).

## Description

The present invention relates to a method for producing hydrogen (H₂) and carbon dioxide (CO₂).

Hydrogen is used extensively in industrial processes. For example, large quantities of H₂ are utilized in the synthesis of ammonia, methanol and the like; for hydrorefining and hydrotreating petroleum; for catalytic hydrogenation; for food hydrogenation; for metal annealing; for the production of hydrogen peroxide; in fuel cells for the generation of electricity; etc. Significant amounts of CO₂ are also used in industrial processes. For example, CO₂ may be injected into oil wells to enhance oil recovery. Also, CO₂ may be used to enhance coal bed treatments, and may be used in molten carbonate fuel cells and in greenhouses.

There are numerous processes for producing hydrogen and carbon dioxide from hydrocarbons or carbonaceous materials. A first step may involve producing hydrogen and carbon monoxide. For example, a gaseous stream containing hydrogen and carbon monoxide may be produced by steam reforming hydrocarbon materials such as methane; reacting coke or coal with steam and air; or partially oxidizing hydrocarbons such as methane, kerosene or diesel to produce a gas stream containing hydrogen and carbon monoxide. In a second step, the gas stream containing hydrogen and carbon monoxide may be treated in a water gas shift reaction with steam to produce carbon dioxide and additional hydrogen.

A known process for producing H₂ and CO₂ has been described in for example US 7 846 413.

A problem of known processes for producing H₂ and CO₂ is that the H₂ and CO₂ are produced at relatively reduced pressures and would typically require compression before further use.

A further problem of known processes is that the separation of CO₂ using absorption in liquid solvents tends to be relatively energy intensive.

It is an object of the present invention to avoid or at least minimize the above problem.

It is a further object of the present invention to provide an alternative method for producing H₂ and CO₂.

One or more of the above or other objects are achieved according to the present invention by providing a method of producing hydrogen (H₂) and carbon dioxide (CO₂), the method at least comprising the steps of:
(a) providing a gaseous hydrocarbon-containing stream at a pressure of at least 8 bara and at a temperature above the dew point of water at the prevailing pressure;
(b) converting the gaseous hydrocarbon-containing stream provided in step (a) thereby obtaining a converted stream comprising H₂ and CO₂;
(c) subjecting the converted stream to a first membrane separation step, thereby obtaining a first H₂-enriched permeate stream and a first H₂-depleted retentate stream, the first H₂-enriched permeate stream having a pressure in the range of from 1.5 to 80 bara; and
(d) subjecting the first H₂-depleted retentate stream to a second membrane separation step, thereby obtaining a second H₂-enriched permeate stream and a second H₂-depleted retentate stream.

It has surprisingly been found according to the present invention that H₂ and CO₂ can be produced at relatively elevated pressures, without the need for subsequent compression (in particular of the first H₂-enriched permeate stream), in an efficient and economical manner.

A further advantage of the present invention is that it allows a high H₂ production yield from the gaseous hydrocarbon-containing stream. Also, first, second and (in case further membrane separation steps are used) further H₂-enriched permeate streams at different pressure levels can be obtained.

In step (a), a gaseous hydrocarbon-containing stream is provided at a pressure of at least 8 bara and at a temperature above the dew point of water (and typically above the dew point of (C2+) hydrocarbons heavier than methane such as ethane, propane and the like) at the prevailing pressure. Preferably, the gaseous hydrocarbon-containing stream provided in step (a) has a pressure of at least 30 bara, preferably at least 40 bara, more preferably at least 50 bara. It is even further preferred that the gaseous hydrocarbon-containing stream has a pressure of at least 60 bara, at least 70 bara, at least 80 bara, at least 90 bara, at least 100 bara, at least 110 bara, at least 120 bara or even at least 130 bara.

Typically, the gaseous hydrocarbon-containing stream provided in step (a) has a temperature of at least 40°C, preferably at least 130°C, more preferably at least 250°C, even more preferably at least 550°C.

The composition of the gaseous hydrocarbon-containing stream as provided in step (a) is not limited in any way. Preferably, the gaseous hydrocarbon-containing stream provided in step (a) comprises at least 30 vol.% gaseous hydrocarbons, on a dry basis. Preferably, the gaseous hydrocarbon-containing stream is a methane-rich stream such as natural gas, containing at least 30 wt.% methane, more preferably at least 50 wt.% methane, on a dry basis. Typically, the gaseous hydrocarbon-containing stream as provided in step (a) comprises at most 60 vol.% H₂ and at most 70 vol.% CO₂, on a dry basis.

In step (b), the gaseous hydrocarbon-containing stream provided in step (a) is converted thereby obtaining a converted stream comprising H₂ and CO₂. The person skilled in the art readily understands that there are several ways of converting the gaseous hydrocarbon-containing stream into a converted stream comprising H₂ and CO₂. As the person skilled in the art is familiar with how to convert the gaseous hydrocarbon-containing stream, this is not further discussed here in detail. Preferably, the converting in step (b) comprises one or more of steam reforming, partial oxidation, autothermal reforming and chemical looping reforming. Also, before subjecting the converted stream obtained in step (b) to the first membrane separation step in step (c), the converted stream may be subjected to one or more of high temperature water gas shift, sour gas shift, low temperature water gas shift, multistage shift, trace element removal (e.g. compounds containing S and/or N, and alkali compounds), etc.

Typically, the converted stream comprises from 10 to 90 vol.% H₂, preferably at least 15 vol.%, and preferably at most 80 vol.%, more preferably at most 70 vol.%, on a dry basis. Further, the converted stream typically comprises from 5 to 90 vol.% CO₂, preferably at least 10 vol.%, more preferably at least 15 vol.%, and preferably at most 75 vol.%, more preferably at most 50 vol.%, on a dry basis.

In step (c), the converted stream is subjected to a first membrane separation step, thereby obtaining a first H₂-enriched permeate stream and a first H₂-depleted retentate stream, the first H₂-enriched permeate stream having a pressure in the range from 1.5 to 80 bara, preferably above 5.0 bar, more preferably above 6.0 bara and preferably below 60 bara.

According to an especially preferred embodiment of the method according to the present invention, the converted stream (to be subjected to the first membrane separation step) does not contain condensate. An advantage hereof is that there will be no clogging of the membrane by any condensate. Preferably, the converted stream obtained in step (b) is subjected to the membrane with minimal intermediate processing steps such as particulate removal, condensate knock-out and other standard treatments as used before applying gas membrane separation. Even more preferably, the converted stream obtained in step (b) is directly subjected to the membrane, i.e. without an intermediate processing step. Preferably, the converted stream (to be subjected to the first membrane separation step) has a temperature of at least 40°C, preferably at least 150°C, more preferably at least 180°C, even more preferably at least 250°C or even at least 300°C.

In the first membrane separation step typically a H₂-permeable and H₂-selective membrane is used. Preferably, in the first membrane separation step a membrane is used having a recovery (of H₂ on the permeate side) of at least 20%, preferably at least 40%, more preferably at least 80%, even more preferably at least 90%, or even at least 95%. In this respect it is noted that, as the person skilled in the art readily understands, there is a difference between 'recovery' and 'selectivity' of a membrane; a high selectivity does not automatically mean a high recovery.

As the person skilled in the art will readily understand what membranes can be used according to the present invention, this is not further discussed here. Examples of a suitable membrane are disclosed in column 9, lines 4-40 of US 7 846 413, which is hereby incorporated by reference. The person skilled in the art will readily understand that the first membrane separation step (as well as the second membrane separation step) may include one or more membranes

In step (d), the first H₂-depleted retentate stream is subjected to a second membrane separation step, thereby obtaining a second H₂-enriched permeate stream and a second H₂-depleted retentate stream. Again, typically, a H₂-permeable and H₂-selective membrane is used. Preferably, in the second membrane separation step a membrane is used having a recovery (of H₂ on the permeate side) of at least 20%, preferably at least 40%, more preferably at least 80%, even more preferably at least 90%. Again, the person skilled in the art will readily understand what membranes can be used.

If desired, further membrane separation steps can be performed. An advantage of the present invention is that first, second and (in case further membrane separation steps are used) further H₂-enriched permeate streams at different pressure levels can be obtained. In case a third membrane separation step is used, this membrane typically has a recovery (of H₂ on the permeate side) of at least 20%, preferably at least 80%, more preferably at least 90%.

If desired, and in particular in case if the method according to the present invention comprises autothermal reforming (ATR) or partial oxidation in step (b) thereby generating CO, a CO shift (high temperature shift (HTS), low temperature shift (LTS), etc.) to H₂ may take place between the first membrane separation step of step (c) and the second membrane separation step of step (d). This is to convert more CO to H₂, which can be separated in the second membrane separation step of step (d). The person skilled in the art will readily understand that further intermediate steps may be performed, e.g. to remove CO₂ (e.g. by cryogenic distillation or flashing, solvent scrubbing), etc.

The first H₂-enriched permeate stream and the first H₂-depleted retentate stream obtained in step (c) and the second H₂-enriched permeate stream and the second H₂-depleted retentate stream obtained in step (d) are not particularly limited. Preferably, the first H₂-depleted retentate stream comprises at least 25 vol.% CO₂, preferably at least 70 vol.%, on a dry basis (e.g. excluding steam, if any). Further it is preferred that the second H₂-depleted retentate stream comprises at least 50 vol.% CO₂, preferably at least 90 vol.%, more preferably at least 94 vol.%, on a dry basis. Both the first and the second H₂-depleted retentate stream may contain CO and H₂O.

According to a preferred embodiment of the present invention, the second H₂-depleted retentate stream is at a pressure of at most 20 bar below the pressure of the gaseous hydrocarbon-containing stream provided in step (a), preferably at most 10 bar below the pressure of the gaseous hydrocarbon-containing stream provided in step (a), more preferably at most 8 bar below the pressure of the gaseous hydrocarbon-containing stream provided in step (a).

Typically, the first H₂-depleted retentate stream has a pressure in the range from 10 to 95 bara, preferably at least 20 bara and preferably at most 80 bara, more preferably at most 50 bara. Typically, the second H₂-depleted retentate stream has a pressure in the range from 10 to 95 bara, preferably at least 20 bara and preferably at most 80 bara, more preferably at most 50 bara.

Hereinafter the invention will be further illustrated by the following non-limiting drawings. Herein shows:
Fig. 1 schematically a simplified process scheme of a first embodiment of the method in accordance with the present invention; and
Fig. 2 schematically a simplified process scheme of a second embodiment of the method in accordance with the present invention.

For the purpose of this description, same reference numbers refer to same or similar components.

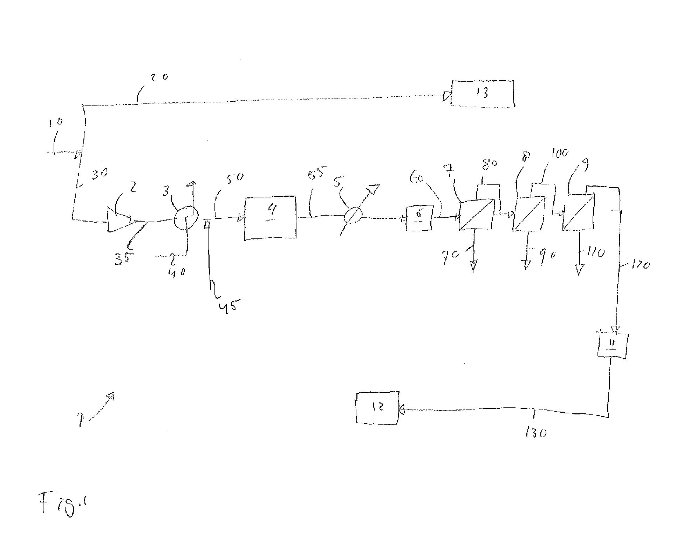

Fig. 1 shows a simplified process scheme of a first embodiment of the method in accordance with the present invention for producing H₂ and CO₂.

The process scheme is generally referred to with reference number 1. The process scheme 1 comprises a compressor 2, a heat exchanger 3, a gasification reactor 4, a heat exchanger 5, a high-temperature shift reactor 6, a first membrane 7, a second membrane 8, a third membrane 9, a low-temperature shift reactor 11, a CO₂ separator 12 and a furnace 13.

During use of the process scheme of Fig. 1, a feed stream 10 of e.g. natural gas is provided. The feed stream 10 is split into a stream 20 and a stream 30. The stream 20 is sent to a furnace 13. The stream 30 is compressed in compressor 2 (thereby obtaining stream 35), heated in heat exchanger 3 against stream 40, combined with oxygen-rich stream 45 and passed to the gasification reactor 4 as stream 50.

In the gasification reactor 4 and the high-temperature shift reactor 6, the stream 50 is converted thereby obtaining a converted stream 60 comprising H₂ and CO₂. In the embodiment of Figure 1, the stream 55 coming from the gasification reactor 4 is cooled in the heat exchanger 5 between the gasification reactor 4 and the high-temperature shift reactor 6.

The converted stream 60 coming from the high-temperature shift reactor 6 is subjected to a first membrane separation step in first membrane 7, thereby obtaining a first H₂-enriched permeate stream 70 and a first H₂-depleted retentate stream 80. The first membrane 7 will typically have a recovery (of H₂) of at least 20%.

The first H₂-enriched permeate stream 70 may be produced at a higher pressure than the partial pressure of H₂ of the converted stream 60, e.g. by using steam with a higher pressure than the pressure of stream 60 as a sweep gas and subsequently condensing the steam to yield H₂ at the desired pressure.

The first H₂-depleted retentate stream 80 is subjected to a second membrane separation step in second membrane 8, thereby obtaining a second H₂-enriched permeate stream 90 and a second H₂-depleted retentate stream 100. The second membrane 8 will typically have a recovery (of H₂) of at least 80%. If desired, the first H₂-depleted retentate stream 80 may be subjected to a low-temperature shift reaction (not shown) before being fed to the second membrane 8.

The second H₂-enriched permeate stream 90 may be produced at a higher pressure than the partial pressure of H₂ of the H₂-depleted retentate stream 80, again by using high pressure steam as a sweep gas. The second H₂-depleted retentate stream 100 is subjected to a third membrane separation step in third membrane 9, thereby obtaining a third H₂-enriched permeate stream 110 and a third H₂-depleted retentate stream 120. The membrane 9 will typically have a recovery (of H₂) of at least 20%.

The third H₂-depleted retentate stream 120 is treated in the low-temperature shift reactor 11 thereby obtaining treated stream 130. This treated stream 130 is subsequently sent to CO₂ separator 12 for removing CO₂ there from. If desired (not shown), the CO₂ depleted stream generated in CO₂ separator 12 may be (partly or fully) recycled to furnace 13, to be used as a fuel gas.

As a mere example, a methane-rich gaseous feed streams having the composition and properties as listed in Table 1 was provided and processed using the scheme of Fig. 1. The composition and properties of the converted stream, the first and second H₂-enriched permeate streams and the first H₂-depleted retentate streams are given in Table 1 as well. The H₂ recovery in the first membrane step was 97% and in the second membrane step 90%. The first H₂-enriched permeate stream 70 and the second H₂-enriched permeate stream 90 contained H₂ and steam that was used to sweep the permeate side of the respective membranes. The CO₂ separation in CO₂ separator 12 was carried out using cryogenic flashing, whereby >90% CO₂ in liquid form was obtained (ready to be pumped to sequestration pressures of 150 bara).

**Table 1**

| Stream | 35 (compressed natural gas) | 50 (mixed feed to converter) | 55 (converted stream after gasification) | 60 (converted stream after shift) | 70 (first H₂-enriched permeate) | 80 (first H₂-depleted retentate) | 90 (second H₂-enriched permeate) | 100 (second H₂-depleted retentate) |
|---|---|---|---|---|---|---|---|---|
| Composition [vol.%, on a dry basis] | | | | | | | | |
| Methane | 94.5 | 57.5 | 0.6 | 0.4 | - | 1.4 | - | 1.5 |
| Ethane | 2.7 | 1.6 | - | - | - | - | - | - |
| Propane | 1.5 | 0.9 | - | - | - | - | - | - |
| Co | - | - | 34.6 | 5.4 | - | 17.2 | - | 0.5 |
| CO₂ | 0.5 | 0.3 | 1.8 | 23.1 | - | 73.8 | - | 94.6 |
| H₂ | - | - | 62.7 | 70.8 | 100 | 6.8 | 100 | 2.5 |
| O₂ | - | 39.2 | - | - | - | - | - | - |
| N₂ | 0.8 | 0.5 | 0.3 | 0.3 | - | 0.8 | - | 0.9 |
| Properties | | | | | | | | |
| Pressure [bara] | 55 | 55 | 50 | 48 | 20 | 47 | 5 | 45 |
| Temp. [°C] | 140 | 250 | 350 | 420 | 420 | 420 | 420 | 420 |

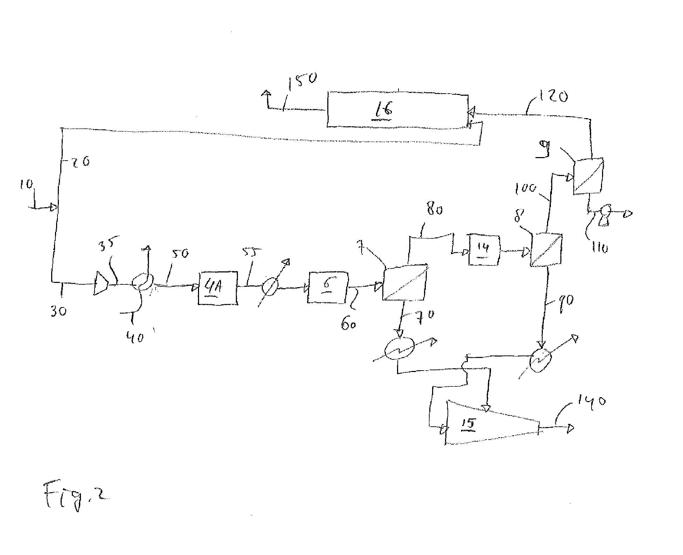

Fig. 2 shows schematically a simplified process scheme of a second embodiment of the method in accordance with the present invention. In this embodiment, an Autothermal Reformer (ATR) unit 4A is used (instead of the gasification reactor 4 as used in Figure 1) to obtain the converted stream 60. Figure 2 further comprises a second high-temperature shift reactor 14 between the first membrane 7 and second membrane 8. Further, the first H₂-enriched permeate stream 70 is cooled to knock out sweep steam and then passed to a multi-stage compressor 15. The second H₂-enriched permeate stream 90 is cooled to knock out steam and then passed to the multi-stage compressor 15 as well, a resulting compressed H₂-enriched stream 140 being removed. In the embodiment of Fig. 2, the third H₂-depleted retentate stream 120 is sent to a NGGC (natural gas combined cycle) plant 16 for generating power, whilst producing flue gas stream 150.

Stream 70 is produced at a higher pressure than stream 80 because of the use of steam sweep (not shown). As a result, stream 70 can be introduced at an intermediate stage of the multi-stage compressor 15, thereby saving significant H₂ compression costs.

The person skilled in the art will readily understand that many modifications may be made without departing from the scope of the invention. Further, the person skilled in the art will readily understand that, while the present invention in some instances may have been illustrated making reference to a specific combination of features and measures, many of those features and measures are functionally independent from other features and measures given in the respective embodiment(s) such that they can be equally or similarly applied independently in other embodiments.

## Claims

1. A method of producing hydrogen (H₂) and carbon dioxide (CO₂), the method at least comprising the steps of:
(a) providing a gaseous hydrocarbon-containing stream (35) at a pressure of at least 8 bara and at a temperature above the dew point of water at the prevailing pressure;
(b) converting the gaseous hydrocarbon-containing stream (35) provided in step (a) thereby obtaining a converted stream (60) comprising H₂ and CO₂;
(c) subjecting the converted stream (60) to a first membrane separation step, thereby obtaining a first H₂-enriched permeate stream (70) and a first H₂-depleted retentate stream (80), the first H₂-enriched permeate stream (70) having a pressure in the range of from 1.5 to 80 bara; and
(d) subjecting the first H₂-depleted retentate stream (80) to a second membrane separation step, thereby obtaining a second H₂-enriched permeate (90) stream and a second H₂-depleted retentate stream (100).

2. The method according to claim 1, wherein the gaseous hydrocarbon-containing stream provided (35) in step (a) has a pressure of at least 30 bara, preferably at least 40 bara, more preferably at least 50 bara.

3. The method according to claim 1 or 2, wherein the gaseous hydrocarbon-containing stream (35) provided in step (a) comprises at least 30 vol.% gaseous hydrocarbons, on a dry basis.

4. The method according to any one of claims 1-3, wherein the converted stream (60) comprises from 10 to 90 vol.% H₂, preferably at least 15 vol.%, and preferably at most 80 vol.%, more preferably at most 70 vol.%, on a dry basis.

5. The method according to any one of claims 1-4, wherein the converted stream (60) comprises from 5 to 90 vol.% CO₂, preferably at least 10 vol.%, more preferably at least 15 vol.%, and preferably at most 75 vol.%, more preferably at most 50 vol.%, on a dry basis.

6. The method according to any one of claims 1-5, wherein the converted stream (60) does not contain condensate.

7. The method according to any one of claims 1-6, wherein the converted stream (60) has a temperature of at least 40°C, preferably at least 150°C, more preferably at least 180°C, even more preferably at least 250°C.

8. The method according to any one of claims 1-7, wherein in the first membrane separation step a membrane (7) is used having a recovery of at least 20%, preferably at least 40%, more preferably at least 80%, even more preferably at least 90%.

9. The method according to any one of claims 1-8, wherein in the second membrane separation step a membrane (8) is used having a recovery of at least 80%, preferably at least 90%, more preferably at least 99%.

10. The method according to any one of claims 1-9, wherein the first H₂-depleted retentate stream (80) comprises at least 25 vol.% CO₂, preferably at least 70 vol.%, on a dry basis.

11. The method according to any one of claims 1-10, wherein the second H₂-depleted retentate stream (100) comprises at least 50 vol.% CO₂, preferably at least 90 vol.%, more preferably at least 94 vol.%, on a dry basis.

12. The method according to any one of claims 1-11, wherein the second H₂-depleted retentate stream (100) is at a pressure of at most 20 bar, preferably at most 10 bar below the pressure of the gaseous hydrocarbon-containing stream (30) provided in step (a).

13. The method according to any one of claims 1-12, wherein the first H₂-depleted retentate stream (80) has a pressure in the range from 10 to 95 bara, preferably at least 20 bara and preferably at most 80 bara, more preferably at most 50 bara.

14. The method according to any one of claims 1-13, wherein the second H₂-depleted retentate stream (100) has a pressure in the range from 10 to 95 bara, preferably at least 20 bara and preferably at most 80 bara, more preferably at most 50 bara.
